# EUROPEAN PATENT APPLICATION

(11) **EP 3 940 598 A1**
(43) Date of publication of application: **19.01.2022**
(21) Application number: 20769352.4
(22) Date of filing: 11.03.2020
(51) Int. Cl.: G06N 3/02, G06N 20/00

(54) **MOTION ANALYSIS DEVICE, MOTION ANALYSIS METHOD, AND MOTION ANALYSIS PROGRAM**

(30) Priority: 14.03.2019 JP 2019047584
(71) Applicant: OMRON Corporation, Shiokoji-dori, Shimogyo-ku, Kyoto-shi Kyoto 600-8530 (JP)
(72) Inventor: MIZUNO, Yuji, Kizugawa-shi, Kyoto 619-0283 (JP); WADA, Hirotaka, Kizugawa-shi, Kyoto 619-0283 (JP)
(74) Representative: Becker, Eberhard
(86) International application number: PCT/JP2020/010444
(87) International publication number: WO 2020/184600

(57) **Abstract**

Provided is a motion analysis device and the like which, using data indicating a motion of an actor of a specific type as training data, is capable of identifying a motion state of an actor of another type. A motion analysis device 10 is provided with: a training unit 14 that trains a learning model to output, using first motion data indicating a predetermined motion performed by an actor of a first type as an input, prediction data that reproduces the first motion data; a calculation unit 15 that calculates a difference between prediction data which is output from the learning model when second motion data indicating a predetermined motion performed by an actor of a second type different from the first type is input to the learning model, and the second motion data; and an output unit 16 that outputs information identified on the basis of the difference.

## Description

### BACKGROUND

### Technical Field

The present invention relates to a motion analysis device, a motion analysis method, and a motion analysis program.

### Related Art

Conventionally, a motion of a worker working on a product manufacturing line or the like may be analyzed by photographing the motion of the worker with a camera or measuring the motion by a motion-capture system.

For example, the following Patent Literature 1 describes a skill acquisition support system which detects a difference in a user's motion with respect to a model's motion by installing sensors to the bodies of a model and a user and comparing a graph of the model's motion with a graph of the user's motion.

Further, the following Patent Literature 2 describes a skill improvement support device which detects a difference by comparing a symbol string which records an ideal motion as a model example with a symbol string of a motion to be supported, and outputs support information corresponding to the difference.

Further, the following Non-Patent Literature 1 describes results of a study on how bending angles of joints are estimated using a balance board and how the bending angles of the joints differ between a beginner and an expert when a heavy object is lifted up.

Further, the following Non-Patent Literature 2 describes results of a study on detecting a difference in motion between a beginner and an expert by performing an extended singular spectrum conversion on time-series data indicating a motion of the beginner and time-series data indicating a motion of the expert and obtaining a motion change point sequence.

### [Citation List]

### [Patent Literature]

[Patent Literature 1] Japanese Patent No. 5757482
[Patent Literature 2] Japanese Patent No. 3747800

### [Non-Patent Literature]

[Non-Patent Literature 1] Soichiro Watanabe, and 9 others, "A difference of human posture between beginner and expert during lifting a heavy load," The 7th 2014 Biomedical Engineering International Conference
[Non-Patent Literature 2] Hiroaki Nakanishi, and 3 others, "A method of motion analysis using singular value decomposition for the purpose of teaching motion," 28th Fuzzy System Symposium (Nagoya, September 12 to 14, 2012)

### SUMMARY

### [Technical Problem]

In the techniques described in the above related art literatures, the difference is identified by comparing the data indicating the motion of the beginner with the data indicating the motion of the expert. Thus, in order to perform an analysis described in the related art literatures, both the data indicating the motion of the beginner and the data indicating the motion of the expert are collected in advance, and an identifier for identifying the difference is generated.

However, it is not always possible to collect a sufficient amount of data indicating motions of a plurality of types of operators, and even when the sufficient amount of data indicating motions of a specific type of operator can be collected, a sufficient amount of data indicating motion of another type of operator may not be collected.

Therefore, the present invention provides a motion analysis device, a motion analysis method, and a motion analysis program capable of identifying a motion state of another type of operator using data indicating a motion of a specific type of operator as learning data.

### [Solution to Problem]

According to one aspect of the disclosure, there is provided a motion analysis device including: a training unit which trains a learning model by inputting first motion data to output prediction data which reproduces the first motion data, where the first motion data indicates a predetermined motion performed by a first type of operator; a calculation unit which calculates a difference between second motion data and the prediction data output from the learning model when the second motion data indicating the predetermined motion performed by a second type of operator is input to the learning model, where the second type is different from the first type; and an output unit which outputs information specified based on the difference.

According to the aspect, even when there is relatively little second motion data indicating the predetermined motion performed by the second type of operator, a motion state of a specific type of operator can be identified due to the learning model by training the learning model to output the prediction data which reproduces the first motion data using the first motion data indicating the predetermined motion performed by the first type of operator as learning data.

In the aspect, the output unit may output a time segment of the second motion data in which the difference is continuously larger than a threshold value for a predetermined period or more.

According to the aspect, it is possible to reduce an influence of noise and to identify the motion state unique to the second type of operator by outputting a time segment in which the prediction data output from the learning model continuously deviates from the second motion data when the second motion data is input to the learning model.

In the aspect, the output unit may output a time segment of the second motion data in which the difference is continuously smaller than a threshold value for a predetermined period or more.

According to the aspect, it is possible to reduce the influence of noise and to identify the motion state common to the first type of operator and the second type of operator by outputting a time segment in which the prediction data output from the learning model continuously does not deviate from the second motion data when the second motion data is input to the learning model.

In the aspect, the output unit may output a portion of the second motion data corresponding to the time segment.

According to the aspect, the motion of the operator corresponding to the output time segment can be easily confirmed, and the motion can be analyzed more smoothly.

In the aspect, the calculation unit may calculate difference data from a square of a difference between the prediction data regarding the first motion data and the first motion data, and calculate the threshold value based on a mean and a standard deviation of the difference data.

According to the aspect, the threshold value can be set appropriately, and a time segment extraction can be performed with higher accuracy by calculating the threshold value based on the mean and the standard deviation of the difference data.

In the aspect, the learning model may include an auto-encoder in which a neural network is used in an encoder and a decoder.

According to the aspect, the auto-encoder which reproduces the first motion data can be generated by encoding a plurality of patterns included in the first motion data with the convolutional neural network and decoding the obtained feature amount.

In the aspect, the second type of operator may be a person different from the first type of operator, and the second type of operator may be different from the first type of operator in at least one of proficiency of the predetermined motion, age, physical features, and sex.

According to the aspect, it is possible to identify the motion state unique to the second type of operator with respect to the second type of operator for whom at least one of proficiency of the predetermined motion, age, physical features and sex is different from that of the first type of operator.

In the aspect, the second type of operator may be a same person as the first type of operator, and the second motion data may be measured at a time different from the first motion data.

According to the aspect, the learning model can be generated by accumulating the first motion data indicating the predetermined motion performed by a certain operator, and it is possible to identify how the motion of the operator changes with the passage of time.

According to another aspect of the disclosure, there is provided a motion analysis method including: training a learning model by inputting first motion data to output prediction data which reproduces the first motion data, where the first motion data indicates a predetermined motion performed by a first type of operator; calculating a difference between second motion data and the prediction data output from the learning model when the second motion data indicating the predetermined motion performed by a second type of operator is input to the learning model, where the second type is different from the first type; and outputting information specified based on the difference.

According to another yet aspect of the disclosure, there is provided a motion analysis program which causes one or a plurality of computers to execute: training a learning model by inputting first motion data to output prediction data which reproduces the first motion data, where the first motion data indicates a predetermined motion performed by a first type of operator; calculating a difference between second motion data and the prediction data output from the learning model when the second motion data indicating the predetermined motion performed by a second type of operator is input to the learning model, where the second type is different from the first type; and outputting information specified based on the difference.

### [Effects of Invention]

According to the present invention, it is possible to provide a motion analysis device, a motion analysis method, and a motion analysis program capable of identifying a motion state of another type of worker using data indicating a motion of a specific type of worker as learning data.

### BRIEF DESCRIPTION OF THE DRAWINGS

FIG. 1 is a diagram showing an outline of a motion analysis system according to an embodiment of the present invention.
FIG. 2 is a diagram showing a functional block of the motion analysis system according to the present embodiment.
FIG. 3 is a diagram showing a physical configuration of a motion analysis device according to the present embodiment.
FIG. 4 is a table summarizing types of motions of a beginner and an expert analyzed by the motion analysis device according to the present embodiment.
FIG. 5 is a diagram showing an example of a learning model of the motion analysis device according to the present embodiment.
FIG. 6 is a diagram showing an example of first motion data and first prediction data used for learning the learning model of the motion analysis device according to the present embodiment.
FIG. 7 is a diagram showing an example of first difference data used for learning the learning model of the motion analysis device according to the present embodiment.
FIG. 8 is a diagram showing an example of second motion data and second prediction data analyzed by the motion analysis device according to the present embodiment.
FIG. 9 is a diagram showing an example of second difference data analyzed by the motion analysis device according to the present embodiment.
FIG. 10 is an enlarged view of a part of the second difference data analyzed by the motion analysis device according to the present embodiment.
FIG. 11 is a flowchart of motion analysis processing performed by the motion analysis system according to the present embodiment.

### DESCRIPTION OF THE EMBODIMENTS

Hereinafter, an embodiment according to one aspect of the present invention (hereinafter referred to as "the present embodiment") will be described with reference to the drawings. In each of the drawings, components having the same reference numerals have the same or similar configurations.

### §1 Application example

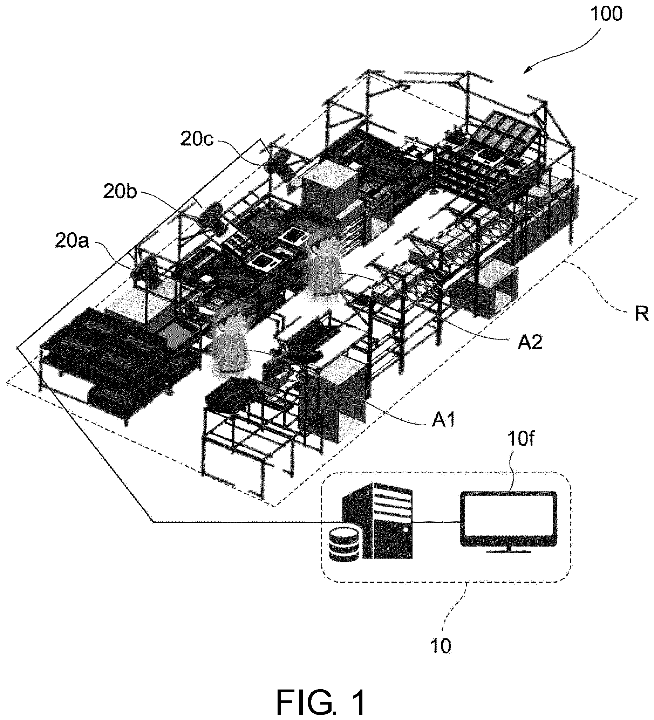

First, an example of a situation in which the present invention is applied will be described with reference to FIG. 1. A motion analysis system 100 according to the present embodiment includes a first photographing unit 20a, a second photographing unit 20b, and a third photographing unit 20c which capture a moving image showing a motion of a worker performed in a certain work region R. The work region R of this example is a region including the entire production line, but the work region R may be an arbitrary region, for example, a region in which a predetermined step is performed, or a region in which a predetermined element motion is performed. Here, the element motion is a unit motion performed by a worker, and examples include, for example, motions such as picking parts, disposing parts, fixing parts, and packing products. In the present embodiment, three steps are performed in the work region R, and each of the first photographing unit 20a, the second photographing unit 20b, and the third photographing unit 20c may capture a moving image in the vicinity of a worker who performs a predetermined step.

In this example, a case in which a first worker A1 and a second worker A2 perform a predetermined motion in a work region R will be described. The first worker A1 can perform motions such as picking, disposing, and fixing of a first component, and the second worker A2 can perform motions such as picking, disposing, and fixing of a second component. Hereinafter, the first worker A1 and the second worker A2 are collectively referred to as a worker A.

The motion analysis system 100 includes a motion analysis device 10. The motion analysis device 10 trains a learning model by inputting first motion data to output prediction data for reproducing the first motion data, and the first motion data indicates a predetermined motion performed by a first type of operator. Here, the motion data is arbitrary data indicating a predetermined motion performed by an operator. For example, when the operator is the worker A, the motion data may be a moving image showing a motion of the worker A or a coordinate value obtained by analyzing the moving image. However, the motion data may be a coordinate value indicating the motion of the operator measured by a motion-capture system, and may be data indicating the motion of the operator measured by installing an acceleration sensor or a gyro sensor on the operator.

The motion analysis device 10 calculates a difference between second motion data and prediction data output from the learning model when the second motion data indicating a predetermined motion performed by a second type of operator is input to the learning model, where the second type is different from the first type. Here, since the learning model is trained to reproduce the first motion data, when the second motion data includes features which are not included in the first motion data, it is considered that the prediction data output from the learning model cannot accurately reproduce the second motion data of such a part, and a difference between the prediction data and the second motion data occurs.

A display unit 10f displays information specified based on the difference between the prediction data and the second motion data. For example, the display unit 10f may display a time segment in which a motion unique to the second type of operator is performed, or may display a time segment in which a motion common to the first type of operator and the second type of operator is performed.

As described above, according to the motion analysis device 10 according to the present embodiment, even when there is relatively little second motion data indicating the predetermined motion performed by the second type of operator, a motion state of a specific type of operator can be identified due to the learning model by training the learning model to output the prediction data which reproduces the first motion data using the first motion data indicating the predetermined motion performed by the first type of operator as learning data.

### §2 Configuration example

### [Functional configuration]

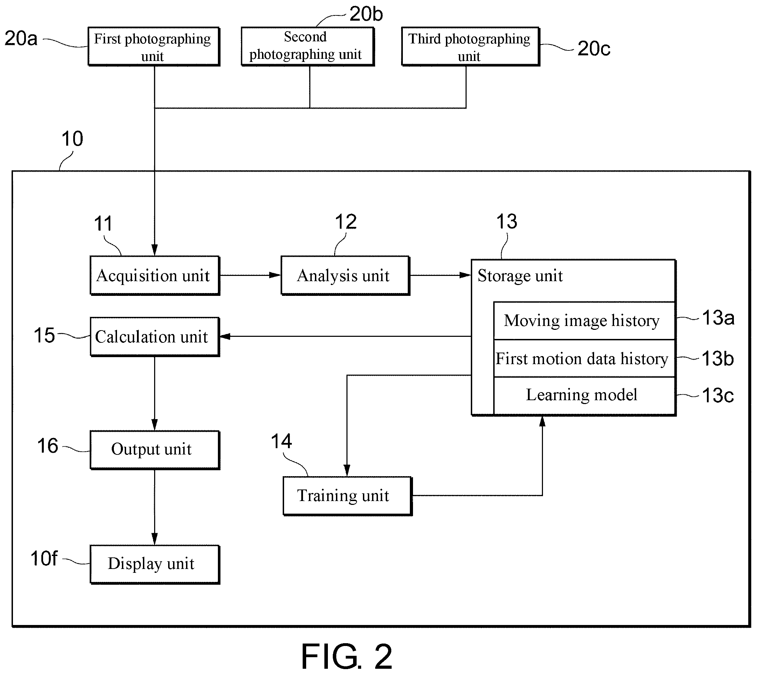

Next, an example of a functional configuration of the motion analysis system 100 according to the present embodiment will be described with reference to FIG. 2. The motion analysis system 100 includes the first photographing unit 20a, the second photographing unit 20b, the third photographing unit 20c, and the motion analysis device 10. Additionally, the motion analysis device 10 includes an acquisition unit 11, an analysis unit 12, a storage unit 13, a training unit 14, a calculation unit 15, an output unit 16, and the display unit 10f.

### <Photographing unit>

Each of the first photographing unit 20a, the second photographing unit 20b, and the third photographing unit 20c may be configured of a general-purpose camera, and may capture a moving image including a scene in which the first worker A1 and the second worker A2 are performing a motion in the work region R. Each of the first photographing unit 20a, the second photographing unit 20b, and the third photographing unit 20c may capture a part of the work region R, and may capture a moving image in a region narrower than the work region R. Specifically, a moving image of a close-up of the motions performed by the first worker A1 and the second worker A2 may be captured. The first photographing unit 20a, the second photographing unit 20b, and the third photographing unit 20c may, for example, capture a moving image of a close-up of the vicinity of the first worker A1 and the second worker A2.

Further, the first photographing unit 20a, the second photographing unit 20b, and the third photographing unit 20c may capture a plurality of moving images in which a plurality of portions of the work region R may be captured. For example, the first photographing unit 20a may mainly capture a moving image in which the first worker A1 is performing the motion, the third photographing unit 20c may mainly capture a moving image in which the second worker A2 is performing the motion, and the second photographing unit 20b may capture both the moving image in which the first worker A1 is performing the motion and the moving image in which the second worker A2 is performing the motion. Further, the first photographing unit 20a, the second photographing unit 20b, and the third photographing unit 20c may capture moving images in which different steps are performed at a plurality of positions in the work region R.

### <Acquisition unit>

The acquisition unit 11 acquires motion data indicating a predetermined motion performed by the worker A. Here, the motion data is arbitrary data indicating a predetermined motion performed by the operator. For example, when the operator is the worker A, the motion data may be a moving image showing the motion of the worker A or a coordinate value obtained by analyzing the moving image. However, the motion data may be a coordinate value indicating the motion of the operator measured by a motion-capture system, and may be data indicating the motion of the operator measured by installing the acceleration sensor or the gyro sensor on the operator. The moving image acquired by the acquisition unit 11 is transmitted to the storage unit 13 and is stored as a moving image history 13 a.

The acquisition unit 11 may acquire a plurality of pieces of motion data indicating motions of a plurality of portions of the worker A which are recorded when the worker A performs a predetermined motion. The plurality of portions of the worker A may be, for example, the head, both eyes, both shoulders, both elbows, both wrists, the knuckles of both hands, the waist, both knees, both ankles, and the like. In addition, the acquisition unit 11 may acquire a plurality of pieces of motion data indicating motions of the left and right portions of the worker A which are recorded when the worker A performs a predetermined motion. The left and right portions of the worker A may be both eyes, both shoulders, both elbows, both wrists, the knuckles of both hands, both knees, both ankles, and the like.

Although the case in which the motion data indicating the predetermined motion performed by the worker A as prescribed is acquired has been described in the present embodiment, the acquisition unit 11 may acquire motion data indicating a predetermined motion performed by an operator who plays sports, may acquire motion data indicating a predetermined motion performed by an operator who performs arts and crafts, may acquire motion data indicating a predetermined motion performed by an operator who performs an ordinary motion, or the like.

### <Analysis unit>

The analysis unit 12 analyzes a moving image showing a predetermined motion performed by the worker A, and calculates motion data including the coordinate value indicating the motion of the worker A. The motion data may be data indicating a displacement of a representative position of the body of the worker A. The representative position of the body of the worker may be one position of the body, and typically may be a plurality of positions. The motion data may be data indicating a position of a joint of the worker A by a skeletal model. The analysis unit 12 may calculate the motion data including the coordinate value indicating the motion of the worker A from the moving image using, for example, a technique disclosed in Zhe Cao, and 3 others "Realtime Multi-Person 2D Pose Estimation using Part Affinity Fields", arXiv:1611.08050, 2016. When the acceleration sensor or the gyro sensor is installed on the worker A and the motion data indicating the motion of the worker A is measured, the processing in which the motion data including the coordinate value indicating the motion of the worker A is calculated from the moving image by the analysis unit 12 becomes unnecessary.

### <Storage unit>

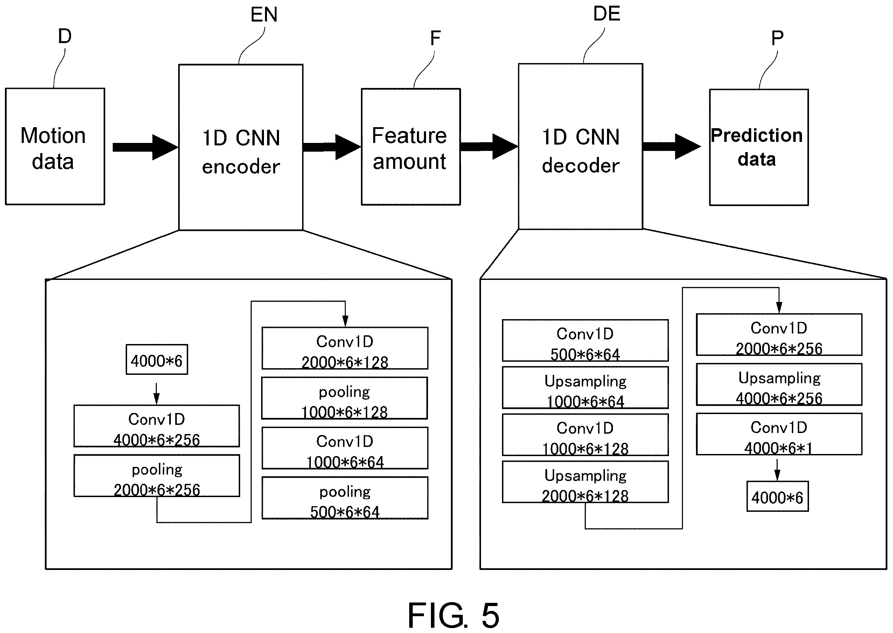

The storage unit 13 stores the moving image history 13a, a first motion data history 13b, and a learning model 13c. The moving image history 13a includes a history of each of the moving images captured by the first photographing unit 20a, the second photographing unit 20b, and the third photographing unit 20c. The first motion data history 13b includes a history of the motion data calculated by the analysis unit 12, and includes a history of the first motion data indicating a predetermined motion performed by the first type of operator. Here, the first motion data history 13b may be stored for each type of the operator. The type of the operator is a classification which shows features of the operator, and may be, for example, a difference between an expert and a beginner in work, right-handed and left-handed, male and female, large and small in terms of physique, and young and middle-aged, or a difference in the time when the motion data is measured. The learning model 13c receives the motion data as an input and outputs prediction data which reproduces the input motion data. An example of a configuration of the learning model 13c will be described with reference to FIG. 5.

### <Training unit>

The training unit 14 trains the learning model 13c by inputting the first motion data to output the prediction data which reproduces the first motion data, and the first motion data indicates the predetermined motion performed by the first type of operator. Here, the first motion data to be input to the learning model 13c may be selected from the first motion data history 13b.

### <Calculation unit>

The calculation unit 15 calculates a difference between the second motion data and the prediction data output from the learning model 13c when the second motion data indicating the predetermined motion performed by the second type of operator is input to the learning model 13c, where the second type is different from the first type. Since the learning model 13c is a model trained to reproduce the first motion data, when the second motion data includes features different from those of the first motion data, it is considered that the prediction data deviates from the second motion data for that part.

### <Output unit>

The output unit 16 outputs information specified based on the difference between the prediction data calculated by the calculation unit 15 and the second motion data. The output unit 16 may output, for example, a time segment of the second motion data in which the difference between the prediction data and the second motion data is continuously larger than a threshold value for a predetermined period or more. It is possible to reduce an influence of noise and to identify the motion state unique to the second type of operator by outputting a time segment in which the prediction data output from the learning model 13c continuously deviates from the second motion data when the second motion data is input to the learning model 13c.

Further, the output unit 16 may output a time segment of the second motion data in which the difference between the prediction data and the second motion data is continuously smaller than the threshold value for a predetermined period or more. It is possible to reduce the influence of noise and to identify the motion state common to the first type of operator and the second type of operator by outputting a time segment in which the prediction data output from the learning model does not continuously deviate from the second motion data when the second motion data is input to the learning model.

The output unit 16 may output the time segment in which the difference between the prediction data and the second motion data is continuously smaller than the threshold value for a predetermined period or more, or may output a portion of the second motion data corresponding to the time segment in which the difference between the prediction data and the second motion data is continuously smaller than the threshold value for a predetermined period or more. In particular, the output unit 16 may output a moving image corresponding to the above-described time segment in the moving image history 13 a. Thus, the motion of the operator corresponding to the output time segment can be easily confirmed, and the motion can be analyzed more smoothly.

The second type of operator may be a person different from the first type of operator, and the second type of operator may be different from the first type of operator in at least one of proficiency of the predetermined motion, age, physical features and sex. For example, the second type of operator may be an expert in the predetermined motion, and the first type of operator may be a beginner in the predetermined motion and vice versa. Further, for example, the second type of operator may be a person whose physical features such as height, weight, arm length, and whether he/she is lean or obese are different from those of the first type of operator. According to the motion analysis device 10 of the present embodiment, it is possible to identify the motion state unique to the second type of operator with respect to the second type of operator for whom at least one of proficiency of the predetermined motion, age, physical features and sex is different from that of the first type of operator.

Further, the second type of operator may be the same person as the first type of operator, and the second motion data may be measured at a time different from that of the first motion data. For example, the second motion data may be the motion data most recently measured when a certain operator performs a predetermined motion, and the first motion data may be the motion data measured in the past when the same operator performs the predetermined motion. Thus, the learning model 13c can be generated by accumulating the first motion data indicating a predetermined motion performed by the certain operator, and it is possible to identify how the motion of the operator changes with the passage of time. For example, it is possible to measure a variation in a state in which the same operator performs the predetermined motion.

### [Hardware configuration]

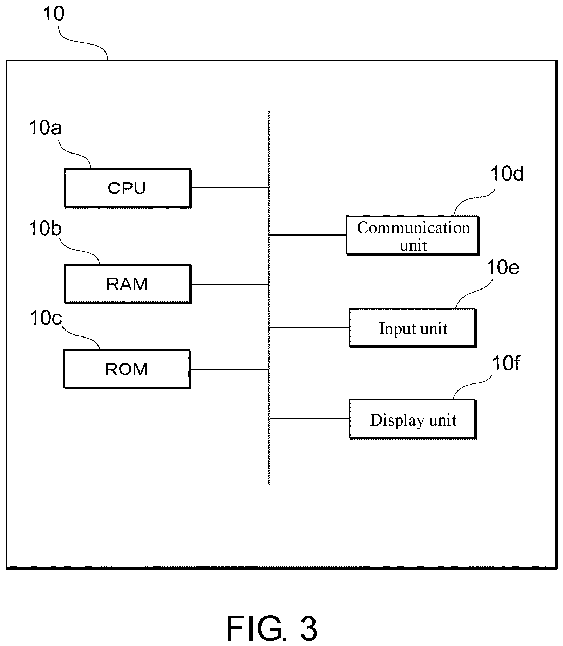

Next, an example of a hardware configuration of the motion analysis device 10 according to the present embodiment will be described with reference to FIG. 3. The motion analysis device 10 includes a central processing unit (CPU) 10a corresponding to a calculation device, a random access memory (RAM) 10b corresponding to the storage unit 13, a read only memory (ROM) 10c corresponding to the storage unit 13, a communication unit 10d, an input unit 10e, and the display unit 10f. Each of the parts is connected to each other via a bus so that data can be transmitted and received. In this example, a case in which the motion analysis device 10 is configured of one computer will be described, but the motion analysis device 10 may be realized using a plurality of computers.

The CPU 10a is a control unit which controls execution of a program stored in the RAM 10b or ROM 10c, calculates data, and processes data. The CPU 10a is a calculation device which executes a program (a motion analysis program) which extracts a portion unique to the second motion data indicating the predetermined motion performed by the second type of operator with respect to the first motion data indicating the predetermined motion performed by the first type of operator. When the motion analysis device 10 is configured of a plurality of computers, for example, training of the learning model may be performed by a computer on a cloud, and calculating of the difference between the second motion data and the prediction data and outputting of information identified based on the difference may be performed on a local computer. The CPU 10a receives a variety of input data from the input unit 10e or the communication unit 10d, displays a calculation result of the input data on the display unit 10f, or stores the calculation result in the RAM 10b or the ROM 10c.

The RAM 10b is one in the storage units 13 in which data can be rewritten, and may be configured of, for example, a semiconductor storage element. The RAM 10b stores the motion analysis program executed by the CPU 10a and data such as the moving image history 13a, the first motion data history 13b, and the learning model 13c.

The ROM 10c is one in the storage unit 13 which can read data, and may be configured of, for example, a semiconductor storage element. The ROM 10c stores, for example, the motion analysis program and data which is not rewritten.

The communication unit 10d is an interface which connects the motion analysis device 10 to an external device. The communication unit 10d may be connected to the first photographing unit 20a, the second photographing unit 20b, and the third photographing unit 20c by, for example, a local area network (LAN), and may receive the moving images from the first photographing unit 20a, the second photographing unit 20b, and the third photographing unit 20c. Further, the communication unit 10d may be connected to the Internet and receive a moving image or motion data via the Internet.

The input unit 10e receives data input from a user, and may include, for example, a keyboard, a mouse, and a touch panel.

The display unit 10f visually displays the calculation result by the CPU 10a, and may be configured by, for example, a liquid crystal display (LCD).

The motion analysis program may be provided in a state in which it is stored in a computer-readable storage medium such as the RAM 10b or the ROM 10c, and may be provided via a communication network connected by the communication unit 10d. In the motion analysis device 10, the CPU 10a executes the motion analysis program to realize the operations of the acquisition unit 11, the analysis unit 12, the training unit 14, the calculation unit 15, and the output unit 16 described with reference to FIG. 2. These physical configurations are exemplary and do not necessarily have to be independent configurations. For example, the motion analysis device 10 may include a large-scale integration (LSI) in which the CPU 10a, the RAM 10b, and the ROM 10c are integrated.

### §3 Motion example

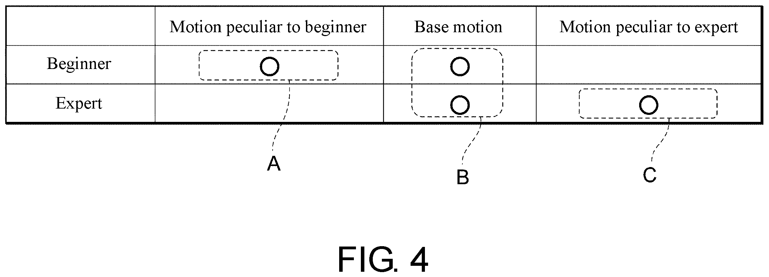

FIG. 4 is a table summarizing kinds of the motions of the beginner and the expert analyzed by the motion analysis device 10 according to the present embodiment. In the drawing, it is shown whether the motions of the beginner and the expert include a "motion unique to the beginner", a "base motion", or a "motion unique to the expert".

It was considered by the inventors of the present invention that the motions of the beginner were configured of the "motion unique to the beginner" and the "base motion", and the motions of the expert were configured of the "base motion" and the "motion unique to the expert". The motions of the beginner and the expert are common to the "base motion", but it is assumed that the beginner is inefficient or unstable because he/she performs the "motion unique to the beginner". On the other hand, the expert is not different from the beginner in that he/she performs the "base motion", but since the expert does not (or rarely) perform the "motion unique to the beginner" and performs the "motion unique to the expert", it is assumed that an efficient and stable motion is realized.

The motion analysis device 10 according to the present embodiment generates the learning model 13c to reproduce the "motion unique to the beginner" and the "base motion" by setting the first type of operator as the beginner. Then, a time segment in which the "motion unique to the expert" is performed can be identified by inputting the second motion data into the learning model 13c with the second type of operator set as the expert and identifying a time segment in which a difference occurs between the prediction data and the second motion data. Also, a time segment in which the "base motion" is performed can be identified by inputting the second motion data into the learning model 13c with the second type of operator set as the expert and identifying the time segment in which the difference does not occur between the prediction data and the second motion data.

Further, the motion analysis device 10 according to the present embodiment can also generate the learning model 13c to reproduce the "base motion" and the "motion unique to the expert" by setting the first type of operator as the expert. Then, a time segment in which the "motion unique to the beginner" is performed can be identified by inputting the second motion data into the learning model 13c with the second type of operator set as the beginner and identifying the time segment in which the difference occurs between the prediction data and the second motion data. Also, the time segment in which the "base motion" is performed can be identified by inputting the second motion data into the learning model 13c with the second type of operator set as the beginner and identifying the time segment in which the difference does not occur between the prediction data and the second motion data.

FIG. 5 is a diagram showing an example of the learning model of the motion analysis device 10 according to the present embodiment. The learning model of this example includes an auto-encoder in which a convolutional neural network is used in an encoder EN and a decoder DE.

The learning model receives motion data D as an input. The motion data D may be, for example, data of X-coordinate values, Y-coordinate values, and Z-coordinate values (6) of the right hand and the left hand for 40 seconds (4000 samples) sampled at 100 Hz. In the case of this example, a dimension of the motion data D is 4000×6.

The encoder EN may be configured of a one-dimensional convolutional neural network (CNN). The encoder EN includes a first convolution layer (Conv1D 4000^{∗}6^{∗}256) including 256 filters, a first pooling layer (pooling 2000^{∗}6^{∗}256), a second convolution layer (Conv1D 2000^{∗}6^{∗}128) including 128 filters, a second pooling layer (pooling 1000^{∗}6^{∗}128), a third convolution layer (Conv1D 1000^{∗}6^{∗}64) including 64 filters, and a third pooling layer (pooling 500^{∗}6^{∗}64). The motion data D of 4000×6 dimensions is converted into a feature amount F of 500×6× 64 dimensions by the encoder EN.

The decoder DE may be configured of a one-dimensional CNN. The decoder DE includes a first (reverse) convolution layer (Conv1D 500^{∗}6^{∗}64) containing 64 filters, a first up-sampling layer (Up-sampling 1000^{∗}6^{∗}64), a second (reverse) convolution layer (Conv1D 1000^{∗}6^{∗}128) containing 128 filters, a second up-sampling layer (Up-sampling 2000^{∗}6^{∗}128), a third (reverse) convolution layer (Conv1D 2000^{∗}6^{∗}256) containing 256 filters, a third up-sampling layer (Up-sampling 4000^{∗}6^{∗}256), and a fourth (reverse) convolution layer (Conv1D 4000^{∗}6^{∗}1) containing one filter. The feature amount F of 500×6×64 dimensions is converted into the prediction data P of 4000×6 dimensions by the decoder DE.

The training unit 14 may update weighting coefficients of the decoder DE and the encoder EN by an error back propagation method based on a difference between the prediction data P and the motion data D, and may generate the learning model so that the difference between the prediction data P and the motion data D becomes zero.

In this way, the auto-encoder which reproduces the first motion data can be generated by encoding a plurality of patterns included in the first motion data with the convolutional neural network and decoding the obtained feature amount.

The learning model may be a model other than the CNN. The learning model may include, for example, a recurrent neural network such as a long short term memory (LSTM) or a neural network having another structure. Further, the learning model may be a model other than the auto-encoder. The learning model may include, for example, an autoregressive model.

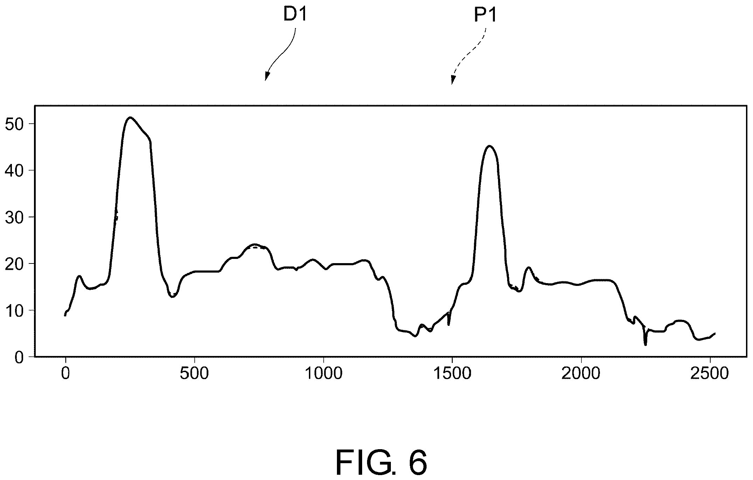

FIG. 6 is a diagram showing an example of the first motion data D1 and the first prediction data P1 used for training the learning model of the motion analysis device 10 according to the present embodiment. In the drawing, a horizontal axis indicates a time, a vertical axis indicates a value of the motion data or the prediction data, the first motion data D1 is indicated by a solid line, and the first prediction data P1 is indicated by a broken line. The first prediction data P1 substantially coincides with the first motion data D1 and is hidden behind the first motion data D1 and is hardly visible.

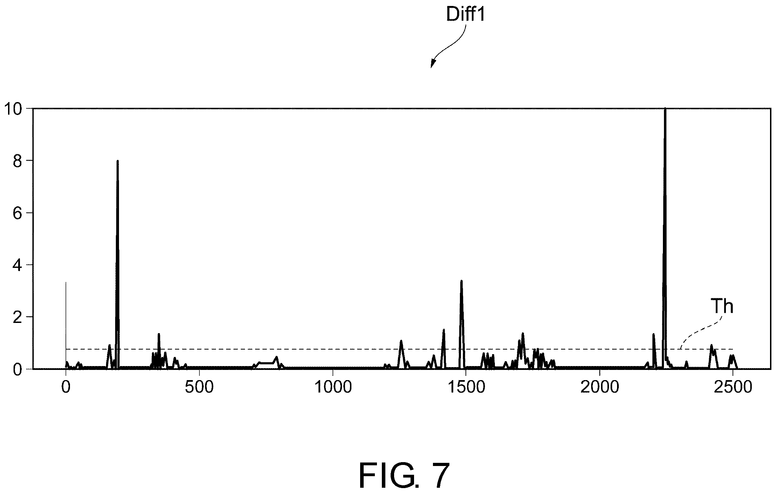

FIG. 7 is a diagram showing an example of first difference data Diff1 used for training the learning model of the motion analysis device 10 according to the present embodiment. The first difference data Diff1 is calculated by the square of the difference between the first motion data D1 and the first prediction data P1. In the drawing, a horizontal axis shows a time, and a vertical axis shows a value of the difference data.

The calculation unit 15 may calculate the first difference data Diff1 by the square of a difference between the first motion data D1 and the first prediction data PI, and may calculate a threshold value Th based on a mean and a standard deviation of the first difference data Diff1. For example, the calculation unit 15 may add N times the standard deviation (N is an arbitrary natural number) to the mean of the first difference data Diff1 to obtain the threshold value Th. The learning model is generated so that the first difference data Diff1 approaches zero, and as shown in this example, there is no time segment in which the first difference data Diff1 is continuously larger than the threshold Th for a predetermined period or more. Due to the influence of noise, there is a moment when the first difference data Diff1 suddenly becomes larger than the threshold value Th.

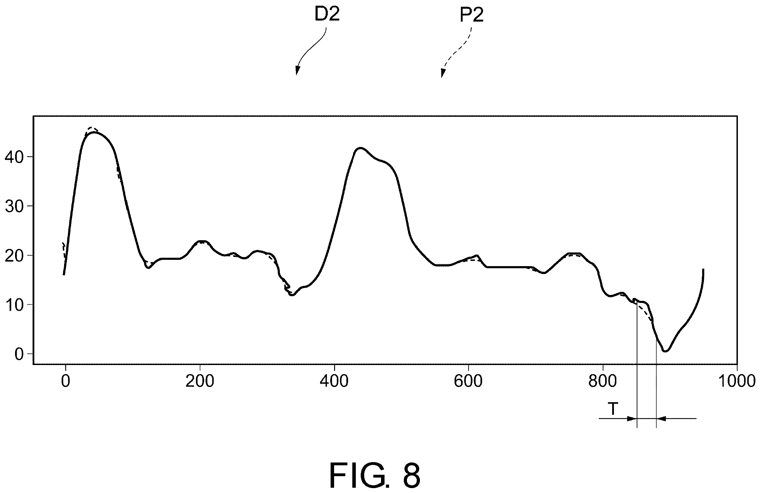

FIG. 8 is a diagram showing an example of the second motion data D2 and the second prediction data P2 analyzed by the motion analysis device 10 according to the present embodiment. In the drawing, a horizontal axis indicates a time, a vertical axis indicates a value of the motion data or the prediction data, the second motion data D2 is indicated by a solid line, and the second prediction data P2 is indicated by a broken line. The second prediction data P2 substantially coincides with the second motion data D2 and is hidden behind the second motion data D2 and is hardly visible, but deviates from the second motion data D2 particularly in a time segment T.

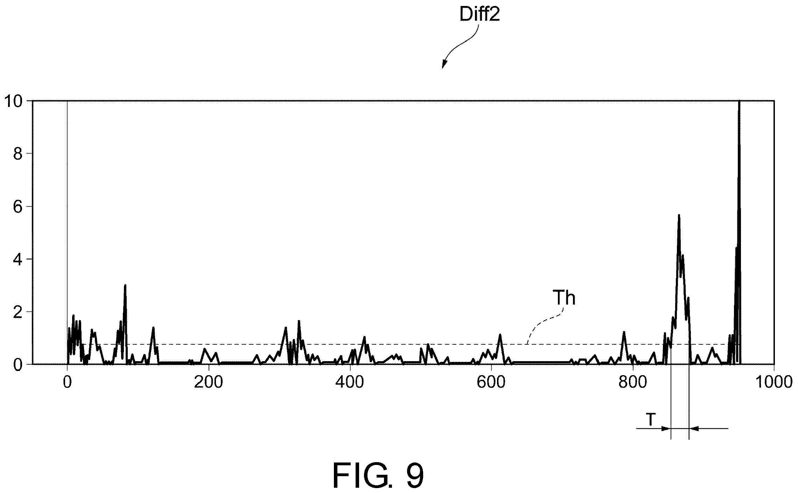

FIG. 9 is a diagram showing an example of second difference data Diff2 analyzed by the motion analysis device 10 according to the present embodiment. The second difference data Diff2 is calculated by the square of a difference between the second motion data D2 and the second prediction data P2. In the drawing, a horizontal axis shows a time, and a vertical axis shows a value of the difference data. The threshold value Th is a value calculated based on the mean and the standard deviation of the first difference data Diff1.

Since the learning model is generated so that the first difference data Diff1 approaches zero, as shown in this example, the second prediction data P2 may deviate from the second motion data D2, and there may be a time segment T in which the second difference data Diff2 may be continuously larger than the threshold Th for a predetermined period or more.

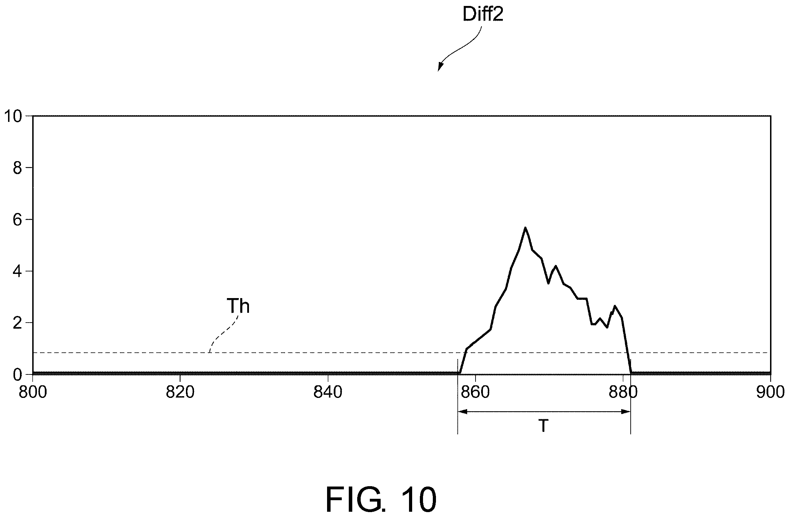

FIG. 10 is an enlarged view of a part of the second difference data Diff2 analyzed by the motion analysis device 10 according to the present embodiment. In the drawing, a horizontal axis shows a time including the time segment T, and a vertical axis shows a value of the difference data.

The output unit 16 may output the time segment T of the second motion data D2 in which the second difference data Diff2 is continuously larger than the threshold value Th for a predetermined period or more. As described above, it is possible to reduce the influence of noise and to identify the motion state unique to the second type of operator by excluding the moment when the second difference data Diff2 is suddenly larger than the threshold Th from an extraction target and extracting the time segment T in which the second difference data Diff2 is continuously larger than the threshold Th.

Further, the motion analysis device 10 according to the present embodiment can set an appropriate threshold value Th and can extract the time segment with higher accuracy by calculating the threshold value based on the mean and the standard deviation of the first difference data Diff1.

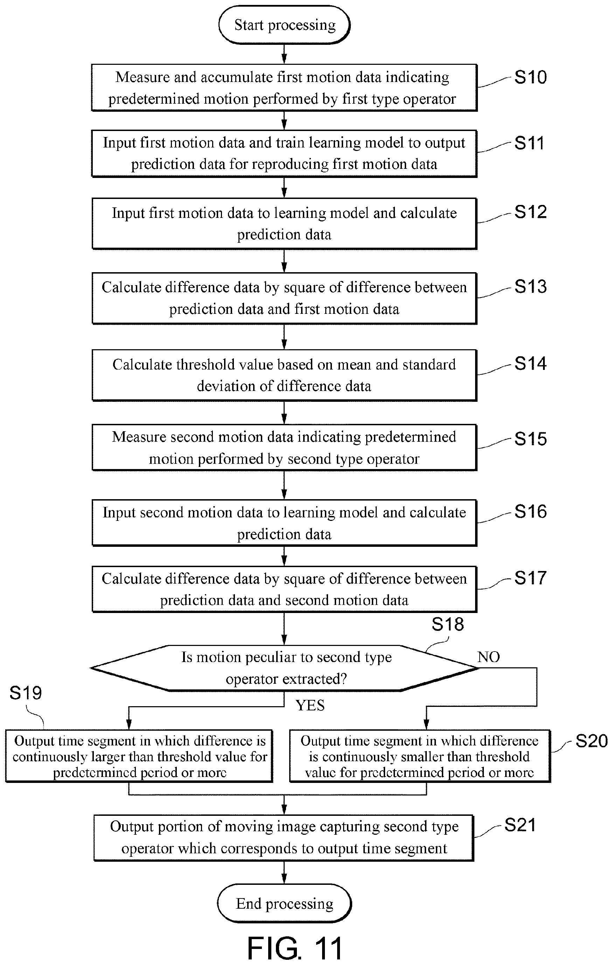

FIG. 11 is a flowchart of motion analysis processing performed by the motion analysis system 100 according to the present embodiment. First, the motion analysis system 100 measures and accumulates the first motion data indicating a predetermined motion performed by the first type of operator (S10).

After a predetermined amount or more of the first motion data is accumulated, the motion analysis system 100 trains the learning model to output the prediction data which reproduces the first motion data using the first motion data as an input (S11).

After that, the motion analysis system 100 inputs the first motion data into the learning model, calculates the prediction data (S12), and calculates the difference data by the square of a difference between the prediction data and the first motion data (S13). Further, the motion analysis system 100 calculates a threshold value based on a mean and a standard deviation of the difference data (S14).

Next, the motion analysis system 100 measures the second motion data indicating the predetermined motion performed by the second type of operator (S15). Then, the motion analysis system 100 inputs the second motion data into the learning model and calculates the prediction data (S16). Further, the motion analysis system 100 calculates the difference data by the square of the difference between the prediction data and the second motion data (S17).

After that, when the motion unique to the second type of operator is extracted (S18: YES), the motion analysis system 100 outputs a time segment in which the difference between the prediction data and the second motion data is continuously larger than the threshold value for a predetermined period or more (S19). On the other hand, when the motion unique to the second type of operator is not extracted (S18: NO), that is, when the motion common to the first type of operator and the second type of operator is extracted, the motion analysis system 100 outputs a time segment in which the difference between the prediction data and the second motion data is continuously smaller than the threshold value for a predetermined period or more (S20).

Finally, the motion analysis system 100 outputs a portion of the moving image of the second type of operator which corresponds to the output time segment (S21). As a result, the motion analysis processing is completed.

The embodiment of the present invention may also be described as the following appendices. However, the embodiment of the present invention is not limited to forms described in the following appendices. Moreover, the embodiment of the present invention may be a form in which the descriptions of the appendices are replaced or combined.

### (Appendix 1)

A motion analysis device (10) includes:
a training unit (14) which trains a learning model by inputting first motion data to output prediction data which reproduces the first motion data, where the first motion data indicates a predetermined motion performed by a first type of operator,
a calculation unit (15) which calculates a difference between second motion data and the prediction data output from the learning model when the second motion data indicating the predetermined motion performed by a second type of operator is input to the learning model, where the second type is different from the first type, and
an output unit (16) which outputs information specified based on the difference.

### (Appendix 2)

In the motion analysis device (10) described in Appendix 1, the output unit (16) outputs a time segment of the second motion data in which the difference is continuously larger than a threshold value for a predetermined period or more.

### (Appendix 3)

In the motion analysis device (10) described in Appendix 1, the output unit (16) outputs a time segment of the second motion data in which the difference is continuously smaller than a threshold value for a predetermined period or more.

### (Appendix 4)

In the motion analysis device (10) described in Appendix 2 or 3, the output unit (16) outputs a portion of the second motion data corresponding to the time segment.

### (Appendix 5)

In the motion analysis device (10) described in any one of Appendices 2 to 4, the calculation unit (15) calculates difference data by a square of a difference between the prediction data regarding the first motion data and the first motion data, and calculates the threshold value based on a mean and a standard deviation of the difference data.

### (Appendix 6)

In the motion analysis device (10) described in any one of Appendices 1 to 5, the learning model includes an auto-encoder in which a neural network is used in an encoder and a decoder.

### (Appendix 7)

In the motion analysis device (10) described in any one of Appendices 1 to 6,
the second type of operator is a person different from the first type of operator, and
the second type of operator is different from the first type of operator in at least one of proficiency of the predetermined motion, age, physical features, and sex.

### (Appendix 8)

In the motion analysis device (10) described in any one of Appendices 1 to 6,
the second type of operator is a same person as the first type of operator, and
the second motion data is measured at a time different from the first motion data.

### (Appendix 9)

A motion analysis method includes,
training a learning model by inputting first motion data to output prediction data which reproduces the first motion data, where the first motion data indicates a predetermined motion performed by a first type of operator,
calculating a difference between second motion data and the prediction data output from the learning model when the second motion data indicating the predetermined motion performed by a second type of operator is input to the learning model, where the second type is different from the first type, and
outputting information specified based on the difference.

### (Appendix 10)

A motion analysis program which causes one or a plurality of computers to execute:
training a learning model by inputting first motion data to output prediction data which reproduces the first motion data, where the first motion data indicates a predetermined motion performed by a first type of operator,
calculating a difference between second motion data and the prediction data output from the learning model when the second motion data indicating the predetermined motion performed by a second type of operator is input to the learning model, where the second type is different from the first type, and
outputting information specified based on the difference.

## Claims

1. A motion analysis device comprising:
a training unit which trains a learning model by inputting first motion data to output prediction data which reproduces the first motion data, wherein the first motion data indicates a predetermined motion performed by a first type of operator;
a calculation unit which calculates a difference between second motion data and the prediction data output from the learning model when the second motion data indicating the predetermined motion performed by a second type of operator is input to the learning model, wherein the second type is different from the first type; and
an output unit which outputs information specified based on the difference.

2. The motion analysis device according to claim 1, wherein the output unit outputs a time segment of the second motion data in which the difference is continuously larger than a threshold value for a predetermined period or more.

3. The motion analysis device according to claim 1, wherein the output unit outputs a time segment of the second motion data in which the difference is continuously smaller than a threshold value for a predetermined period or more.

4. The motion analysis device according to claim 2 or 3, wherein the output unit outputs a portion of the second motion data corresponding to the time segment.

5. The motion analysis device according to any one of claims 2 to 4, wherein the calculation unit calculates difference data from a square of a difference between the prediction data regarding the first motion data and the first motion data, and calculates the threshold value based on a mean and a standard deviation of the difference data.

6. The motion analysis device according to any one of claims 1 to 5, wherein the learning model comprises an auto-encoder in which a neural network is used in an encoder and a decoder.

7. The motion analysis device according to any one of claims 1 to 6, wherein:
the second type of operator is a person different from the first type of operator, and
the second type of operator is different from the first type of operator in at least one of proficiency of the predetermined motion, age, physical features, and sex.

8. The motion analysis device according to any one of claims 1 to 6, wherein:
the second type of operator is a same person as the first type of operator, and
the second motion data is measured at a time different from the first motion data.

9. A motion analysis method comprising:
training a learning model by inputting first motion data to output prediction data which reproduces the first motion data, wherein the first motion data indicates a predetermined motion performed by a first type of operator;
calculating a difference between second motion data and the prediction data output from the learning model when the second motion data indicating the predetermined motion performed by a second type of operator is input to the learning model, wherein the second type is different from the first type; and
outputting information specified based on the difference.

10. A motion analysis program which causes one or a plurality of computers to execute:
training a learning model by inputting first motion data to output prediction data which reproduces the first motion data, wherein the first motion data indicates a predetermined motion performed by a first type of operator;
calculating a difference between second motion data and the prediction data output from the learning model when the second motion data indicating the predetermined motion performed by a second type of operator is input to the learning model, wherein the second type is different from the first type; and
outputting information specified based on the difference.
